**Europäisches Patentamt**

(19) **European Patent Office**

**Office européen des brevets**

(11) Publication number: **0 006 270**

**B1**

(12) ## EUROPEAN PATENT SPECIFICATION

(45) Date of publication of patent specification: **21.10.81**

(51) Int. Cl.³: **B 29 D 27/00** //B29D27/04

(21) Application number: **79200300.6**

(22) Date of filing: **12.06.79**

(54) Method and apparatus for the manufacture of objects from thermoplastic structural foam.

(30) Priority: **13.06.78 NL 7806374**

(43) Date of publication of application:
**09.01.80 Bulletin 80/1**

(45) Publication of the grant of the European patent:
**21.10.81 Bulletin 81/42**

(84) Designated Contracting States:
**BE DE FR GB IT NL**

(56) References cited:
**FR - A - 1 308 474**
**FR - A - 2 358 250**
**GB - A - 1 314 452**
**US - A - 3 925 526**

(73) Proprietor: **STAMICARBON B.V.**
**Postbus 10**
**NL-6160 MC Geleen (NL)**

(72) Inventor: **Kersemakers Josef Johannes Franciscus Maria**
**Hillenraedtstraat 31**
**NL-6136 BR Sittard (NL)**
Inventor: **Leyen, Joannes Jacobus Petrus**
**Kastanjelaan 5**
**NL-6131 KA Sittard (NL)**

(74) Representative: **Hoogstraten, Willem Cornelis Roeland et al,**
**OCTROOIBUREAU DSM Postbus 9**
**NL-6160 MA Geleen (NL)**

Courier Press, Leamington Spa, England.

## Method and apparatus for the manufacture of objects from thermoplastic structural foam

The invention relates to a method and apparatus for the manufacture of objects from plastics structural foam by placing a foamable plastics material into a cooled mould of which the cooling is controlled in such a manner that the cooling in one or more places between two opposite mould walls is accelerated.

Objects consisting of thermoplastic structural foam have a foamed core and a compact skin, with a gradual transistion in material density from the core towards the surface.

The injection moulding of objects from structural foam according to a known method is as follows. After addition of a blowing agent, the themoplastic material is plasticized in an extruder and homogenized, after which it is rapidly injected into a mould by means of an injection cylinder and plunger. Up to the moment of entering the mould, the material is kept under a pressure which is higher than the foaming pressure of the blowing agent at the operating temperature in order to prevent premature foaming.

The volume of the unfoamed material injected is normally smaller than the volume of the mould. As the pressure in the mould is lower than the foaming pressure of the blowing agent, the material injected will expand so that the mould is filled up completely. A large part of the volatile blowing agent escapes from the material which is at the boundary surface during the filling. The material practically free of blowing agent is then pushed against the cooled wall of the mould, where its temperature declines so far that plasticity is lost and a compact skin is formed.

The object can be removed from the mould as soon as it has cooled to the point where the skin can resist the internal pressure of the blowing agent, and the heat in the core can no longer soften the skin.

The cooling time of the mould takes up a relatively large part of the total time required for an injection-moulding cycle. The drawbacks of this are that the injection-moulding machine cannot be utilized optimally and that the material must be retained in the injection-moulding machine for a long time. These long retention times at the usual high operating temperatures are harmful to the heat-sensitive material and impair the quality of the objects to be produced.

To obviate these drawbacks, a system with several moulds to each injection-moulding machine is sometimes used. This system is expensive owing to the costs of purchase and maintenance of the moulds and the appurtenant device for transport of the moulds.

Another system to obviate the drawbacks mentioned involves a method of cooling which is partially effected outside the mould. With this method, the object is removed from the mould when the skin of the object is already capable of resisting the internal pressure of the blowing agent, but the heat in the core is still high enough to soften the skin of the object. To prevent softening of the skin and the resultant deformation, the object is immersed in a cooling bath immediately upon removal from the mould. This cooling bath takes over the cooling function of the mould, which becomes thus available again for a following cycle. Although this system permits of time saving with respect to the cooling time in the mould, the time involved in the formation of a skin capable of resisting the internal blowing pressure is relatively long, particularly in the case of higher wall thicknesses. Moreover, the cooling bath device involves additional costs of purchase and maintenance.

From the US patent 3.925.526 a method is known for making of objects from thermosetting resins with a foamed core and a compact skin in which by local cooling of the wall of the mould the material placed in the mould between two opposite moulds walls locally undergoes an accelerated cooling as a result of which bridges of compact material may be formed between two opposite skin areas.

The aim of the invention is to provide method for the manufacture of objects from plastics structural foam by placing a foamable plastics material into a cooled mould of which the cooling is controlled in such a manner that the cooling in one or more places between two opposite mould walls is accelerated, with obviation or supression of the above-mentioned drawbacks and with a possibility for combination with existing methods.

According to the invention this aim has been achieved in that a thermoplastic material is fed into the mould by injection, that the cooling is controlled in such a manner that, prior to complete solidification of the core material, in one or more places bridges are formed which consist of solidified foamed material and connect two opposite solidified skin areas of the object and in that the moulded object is removed from the mould at the moment that the bridges, together with the solidified skin are capable of resisting the internal pressure of the blowing agent.

If necessary, continued cooling outside the mould can take place immediately after release of the object.

The apparatus according to the invention comprises an injection-moulding machine and a mould with cooling means, there being cooling fingers attached on at least one of two opposite mould walls, which cooling fingers are not in contact with other parts of the mould when this is in closed position. If both opposite walls of the mould are provided with cooling fingers either these fingers pass along each other when

the mould is closed, or they are in line two by two.

In another design, the locally increased cooling effect is obtained in that the number of cooling channels locally in the mould wall is increased, or in that some cooling channels are connected to a source which supplies a colder cooling medium. Combination of both features is also possible. Since the method and the apparatus according to the invention permit of making bridges of solid material between opposite solid surface areas anywhere in an object which for the rest is still in a plastic condition, the moment at which the internal foam pressure is no longer able to deform the object is reached sooner than without formation of bridges. The object can thus be taken out of the mould earlier, so that a considerable time saving is reached in the overall injection-moulding cycle.

It has been found that during the cooling process the object is alternately in contact with the mould wall or clear of it. An explanation for this phenomenon is that thermal shrinking causes the object to get clear of the wall and is consequently cooled at a lower rate, so that the internal heat plasticizes the previously solidified skin and the internal foam pressure makes the object expand until it is in contact with the mould wall again. This process may recur a few times until the object has lost so much of its internal heat that the residual heat is insufficient to plasticize the solidified skin. A suitable moment for removing the object from the mould is when the object gets clear of the wall for the first time and the counter-pressure in the mould is consequently low. This moment can be found by means of a pressure measurement, but it can also be determined empirically and included in the programme of the injection-moulding cycle.

Thermoplastics which are processed into objects of structural foam according to the method described above are, for instance, polyethylene, polypropylene, polystyrene, polycarbonate, polyamides and thermoplastic polyesters, as well as copolymers and mixtures thereof.

The action of the foaming agent may be brought about by a physical as well as a chemical process. The foaming agent may be added to the material before plasticizing, but also during plasticizing and homogenizing.

The process according to the invention is notably suitable for the manufacture of thick plates or sheets, either flat or curved, used for construction of walls and furniture.

The invention will now be elucidated with reference to an embodiment represented in the drawing.

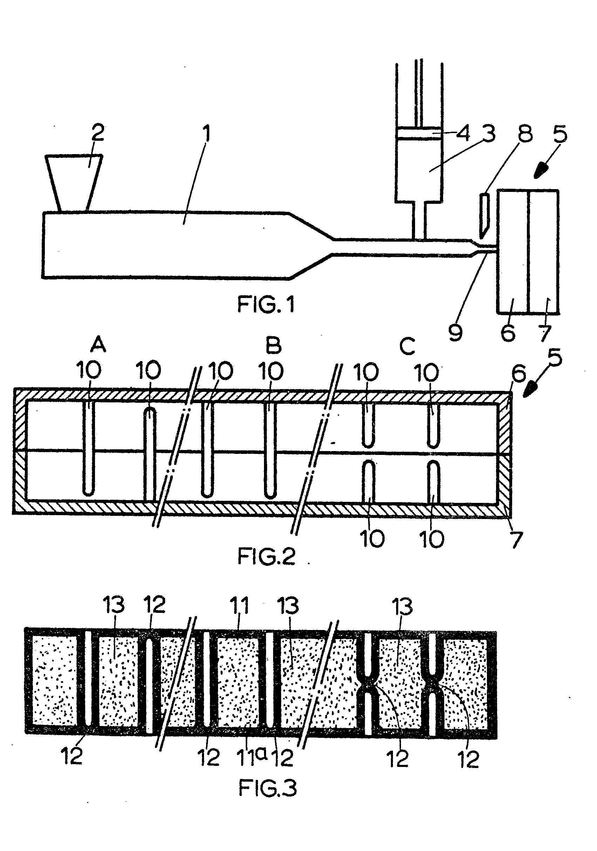

Fig. 1 is a diagramamtic representation of an injection-moulding unit; Fig. 2 is a cross-section of a mould according to the invention; Fig. 3 is a cross-section of an object manufactured according to the invention.

Fig. 1 shows and extruder 1 with a feed hopper 2, an injection moulding cylinder 3 with plunger 4, a mould 5 consisting of two halves 6 and 7, and a valve 8 for the feed channel 9.

A cross-section of the mould 5 on an enlarged scale is shown in figure 2, which also shows how the cooling fingers 10 can be arranged. In the left-hand section A and in the right-hand section C of the figure, both mould halves 6 and 7 have cooling fingers 10, which pass along each other in section A and are in line in section C. The middle section, B, shows a mould of which only one of the two opposite mould walls has cooling fingers.

As shown by figure 2, the cooling fingers 10 are not in contact with other parts of the closed mould, some distance remaining between the cooling fingers and the opposite mould half or between opposite cooling fingers.

The cooling fingers may be provided with cooling channels.

The thermoplastic material, to which blowing agent has been added, is fed into the extruder 1 from the feed hopper 2 and subjected to a plastizing and homogenizing treatment. By means of the injection-moulding cylinder 4 and the plunger 3, a certain quantity of the material is then rapidly injected into the mould 5, where it expands and fills the mould cavity.

Because the mould is provided with cooling fingers, a solidified skin 11 is formed not only against the mould walls after a short time, but also along the cooling fingers 10, so that bridge-like solidified material sections 12 are formed, which connect the opposite skin areas 11 and 11a (fig. 3).

After a very short time these bridge-like sections connect the opposite skin areas so that the whole is capable of resisting the internal pressure prevailing in the object.

#### Example

Some test series were carried out with a mould according to the invention.

One series (A) was carried out with a mould of which one half had been provided with cooling fingers placed at the points of intersection of a square network, the length of the square sides being 71 mm, and another series (B) with the same mould, the difference being that the square side was 37 mm. With the mould in closed position, the perpendicular distance between the inside walls was 10 mm; the cooling fingers, 8.5 mm in length, were round in section, with a diameter tapering from 16 mm at the wall to 15 mm at the detached end.

The internal length and width of the mould were 500 × 300 mm.

The material injected was high-density polyethylene, containing a quantity of blowing agent calculated to give the injection-moulded object a final density of 590 kg/m³.

The mouldings were removed from the mould starting at 50 seconds after injection and with intervals of 10 seconds. The final thickness of each of the mouldings was measured half an hour after its demoulding.

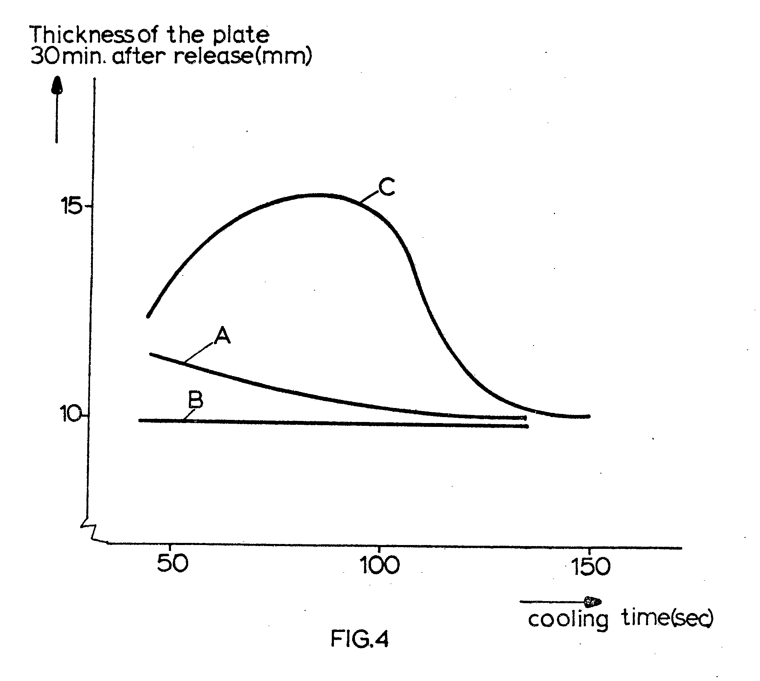

The results have been plotted in a graph (see fig. 4), in which curve A and curve B represent the results of the tests series A and B, respectively, while curve C represents the results of a comparative test series with the same mould, not provided with cooling fingers.

The significance of the method according to the invention appears clearly from a comparison of curves B and C.

In B, measurable thickness increase of the object already stops after a cooling time of 50 seconds, while in C this is the case only after 150 seconds.

A reduction of the cooling cycle duration by more than 100 seconds is of essential significance in seeking optimum utilization of injection-moulding equipment.

## Claims

1. Method for the manufacture of objects from plastics structural foam by placing a foamable plastics material into a cooled mould of which the cooling is controlled in such a manner that the cooling in one or more places between two opposite mould walls is accelerated, this method being characterized in that a thermoplastic material is fed into the mould by injection, that the cooling is controlled in such a manner that, prior to complete solidification of the core material, in one or more places bridges are formed which consist of solidified foamed material and connect two opposite solidified skin areas of the object and in that the moulded object is removed from the mould at the moment that the bridges, together with the solidified skin are capable of resisting the internal pressure of the blowing agent.

2. Method according to claim 1, characterized in that the moment at which the object is removed from the mould is determined by means of a pressure measurement.

3. Method according to claim 1, characterized in that the object is subjected to continued cooling in a cooling bath immediately after release from the mould.

4. Apparatus for carrying out the method according to claim 1 including an injection moulding machine and a mould with cooling means, characterized in that cooling fingers are attached on at least one of two opposite mould walls, which cooling fingers are not in contact with other parts of the mould when this is in closed position.

5. Apparatus according to claim 4, characterized in that, with the mould in closed position each cooling finger on one mould wall is in line with a cooling finger on the opposite wall.

6. Apparatus according to claim 4, characterized in that, with the mould in closed position, the cooling fingers of two opposite mould walls pass along each other.

7. Apparatus according to any of the claims 4 to 6, characterized in that the cooling fingers are provided with cooling channels.

## Revendications

1. Méthode de préparation d'objets de mousse structurée de matière plastique, en mettant une matière plastique expansible dans un moule refroidi dont le refroidissement est effectué de telle façon que le refroidissement est accéléré à un ou à plusieurs endroits entre deux parois opposées du moule, caractérisée en ce qu'une matière thermoplastique est injectée dans le moule, que le refroidissement est effectué de telle façon qu'avant la solidification complète de la substance de noyau, il se forme, à un ou à plusieurs endroits, des ponts qui se composent de matériau expansé solidifié et qui relient deux surfaces de peau solidifiées du moule entre elles et que l'objet moulé est enlevé duy moule au moment où les ponts, ensemble avec la peau solidifiée, sont en état de résister à la pression intérieure de l'agent moussant.

2. Méthode selon la revendication 1, caractérisée en ce que le moment où l'objet est enlevé du moule est déterminé moyennant une mesure de la pression.

3. Méthode selon la revendication 1, caractérisée en ce que l'objet est soumis à un refroidissement continué dans un bain de refroidissement, immédiatement après qu'il est enlevé du moule.

4. Dispositif pour la mise en oeuvre de la méthode selon la revendication 1, y compris un appareil de moulage par injection et un moule avec des moyens de refroidissement, caractérisé en ce que des doigts de refroidissement sont attachés à du moins une de deux parois opposées du moule, lesquels doigts ne sont pas en contact avec d'autres parties du moule quand celui-ci est fermé.

5. Dispositif selon la revendication 4, caractérisé en ce que, le moule étant fermé, chaque doigt de refroidissement à l'une paroi du moule est sur la même ligne qu'un doigt de refroidissement attaché à la paroi opposée.

6. Dispositif selon la revendication 4, caractérisé en ce que, le moule etant fermé, les doigts de refroidissement de deux parois opposées du moule passent l'un à côté de l'autre.

7. Dispositif selon l'une ou l'autre des revendications 4 à 6, caractérisé en ce que les doigts de refroidissement sont pourvus de canaux de refroidissement.

## Patentansprüche

1. Verfahren zum Herstellen von Gegenständen aus Kunststoffstrukturschaum, indem ein schaumartiger Kunststoff in eine abgekühlte Form eingebracht wird, deren Abkühlung so beherrscht wird, dass die Abkühlung an einer oder mehreren Stellen zwischen zwei gegenüber einander liegenden Formwänden beschleunigt wird, dadurch gekennzeichnet, dass der Form durch Einspritzen ein thermoplastisches Material zugeführt wird, die Abkühlung so beherrscht wird, dass an einer oder mehreren Stellen vor Beendigung des Erstarrens des Kernmaterials Stege aus erstarrtem Schaum gebildet werden, die zwei gegenüber einander liegende erstarrte Flächen des Gegenstands verbinden und dass der geformte Gegenstand in dem Augenblick entformt wird, dass die Stege zusammen mit der erstarrten Haut dem inneren Druck des Treibmittels statthalten kann.

2. Verfahren nach Anspruch 1, dadurch gekennzeichnet, dass der Augenblick der Entformung des Gegenstands anhand einer Messung des Drucks bestimmt wird.

3. Verfahren nach Anspruch 1, dadurch gekennzeichnet, dass der Gegenstand sofort nach der Entformung einer weiteren Abkühlung in einem Kühlbad unterzogen wird.

4. Einrichtung zum Durchführen des Verfahrens nach Anspruch 1, einschliesslich einer Spritzgussmachine und einer Form mit Kühlmitteln, dadurch gekennzeichnet, dass an mindestens einer von zwei gegenüber einander liegenden Formwänden Kühlfinger angeordnet sind, die bei geschlossener Form mit anderen Teilen der Form nich in Berührung kommen.

5. Einrichtung nach Anspruch 4, dadurch gekennzeichnet, dass jeder Kühlfinger bei geschlosener Form an einer Formwand mit einem Kühlfinger an der gegenüberliegenden Wand gewuchtet ist.

6. Einrichtung nach Anspruch 4, dadurch gekennziechnet, dass die Kühlfinger von zwei gegenüber einander liegenden Formwänden bei geschlossener Form einander passieren.

7. Einrichtung nach einem der Ansprüche 4 bis 6, dadurch gekennzeichnet, dass die Kühlfinger mit Kühlkanälen ausgerüstet sind.

FIG. 1

FIG.2

FIG.3

Thickness of the plate
30 min. after release (mm)

FIG.4

cooling time (sec)